# EUROPEAN PATENT APPLICATION

(11) **EP 4 344 228 A1**
(43) Date of publication of application: **27.03.2024**
(21) Application number: 22848619.7
(22) Date of filing: 28.07.2022
(51) Int. Cl.: H04N 21/44

(54) **VIDEO EDITING METHOD AND APPARATUS, ELECTRONIC DEVICE, AND STORAGE MEDIUM**

(30) Priority: 30.07.2021 CN 202110873178
(71) Applicant: Beijing Zitiao Network Technology Co., Ltd., Beijing 100190 (CN)
(72) Inventor: CAO, Jiajin, Beijing 100086 (CN)
(74) Representative: Dentons UK and Middle East LLP
(86) International application number: PCT/CN2022/108480
(87) International publication number: WO 2023/006014

(57) **Abstract**

Embodiments of the present disclosure provide a video editing method and apparatus, an electronic device, and a storage medium. The method comprises: displaying a material filling interface of a target clip video, the target clip video comprising a plurality of clip segments, and the material filling interface comprising a video preview area, a clip segment switching area, and a multimedia material selection area; in response to a switching operation in the clip segment switching area, switching a selected first clip segment between the plurality of clip segments; in response to a selection operation on a first material in the multimedia material selection area, filling the first material into the first clip segment; and in response to a playback trigger operation on the target clip video, displaying and playing back the target clip video in the video preview area.

## Description

The present application claims priority to China Patent Application No. 202110873178.7 filed to CNIPA on July 30, 2021, which is incorporated by reference in the present application in its entirety.

### TECHNICAL FIELD

The embodiments of the present disclosure relate to the field of video processing technology, for example to a video editing method and apparatus, an electronic device and a storage medium.

### BACKGROUND

At present, the video generation software may recommend image materials according to an article imported by the user, so that the user may use the recommended image materials to make a video.

After the image materials are recommended, due to the reasons that the recommended image materials do not have a favorable effect or conform to the user' s desire, the scenario that the material filled in the video needs to be replaced may often occur. In the related art, when intended to replace the image material filled in the video, the user may select a video segment in which the image material is located in the video editing interface, click a replacement control in the video editing interface to enter the material interface, select a material in the material interface to fill in the video segment, and return to the video editing interface again to check a preview effect of the filled material.

However, in the related art, the operation of the material filling method is cumbersome, and the video editing efficiency is low, which results in that the video making process needs to take a long time.

### SUMMARY

The embodiments of the present disclosure provide a video editing method and apparatus, an electronic device and a storage medium, so as to realize fast filling and preview of the video material.

In a first aspect, an embodiment of the present disclosure provides a video editing method, comprising:
displaying a material filling interface of a target editing video; wherein the target editing video includes a plurality of editing segments, and the material filling interface includes a video preview area, an editing segment shift area and a multimedia material selection area;
shifting a selected first editing segment among the plurality of editing segments in response to a shifting operation in the editing segment shifting area;
filling a first material into the first editing segment in response to a selection operation of the first material in the multimedia material selection area, so that the first editing segment presents the first material in the target editing video; and
playing the target editing video in the video preview area in response to a play triggering operation of the target editing video.

In a second aspect, an embodiment of the present disclosure further provides a video editing apparatus, comprising:
a filling interface displaying module configured to display a material filling interface of a target editing video; wherein the target editing video includes a plurality of editing segments, and the material filling interface includes a video preview area, an editing segment shift area and a multimedia material selection area;
an editing segment shifting module configured to shift a selected first editing segment among the plurality of editing segments in response to a shifting operation in the editing segment shift area;
a material filling module configured to fill a first material into the first editing segment in response to a selection operation of the first material in the multimedia material selection area, so that the first editing segment presents the first material in the target editing video; and
a video play module configured to display the target editing video for play in the video preview area in response to a play triggering operation of the target editing video.

In a third aspect, an embodiment of the present disclosure further provides an electronic device comprising:
at least one processor;
a memory configured to store one or more programs,
wherein the one or more programs, when executed by the at least one processor, causes the at least one processor to perform the video editing method according to an embodiment of the present disclosure.

In a fourth aspect, an embodiment of the present disclosure further provides a computer-readable storage medium having a computer program stored thereon that, when executed by a processor, performs the video editing method according to an embodiment of the present disclosure.

### BRIEF DESCRIPTION OF THE ACCOMPANYING DRAWINGS

Throughout the accompanying drawings, the same or similar reference numerals indicate the same or similar elements. It should be understood that the accompanying drawings are schematic, and the members and elements are not necessarily drawn to scale.
Fig. 1 is a schematic flowchart of a video editing method provided by an embodiment of the present disclosure;
Fig. 2 is a schematic view of a material filling interface provided by an embodiment of the present disclosure;
Fig. 3 is a schematic view of a video editing interface provided by an embodiment of the present disclosure;
Fig. 4 is a schematic view of a screen control list provided by an embodiment of the present disclosure;
Fig. 5 is a schematic view of a cropping interface of an image material provided by an embodiment of the present disclosure;
Fig. 6 is a schematic view of a cropping interface of a video material provided by an embodiment of the present disclosure;
Fig. 7 is a schematic flowchart of another video editing method provided by an embodiment of the present disclosure;
Fig. 8 is a schematic view of a text editing interface provided by an embodiment of the present disclosure;
Fig. 9 is a structural block view of a video editing apparatus provided by an embodiment of the present disclosure;
Fig. 10 is a schematic structural view of an electronic device provided by an embodiment of the present disclosure.

### DETAILED DESCRIPTION

The embodiments of the present disclosure will be described in more detail with reference to the accompanying drawings below. Although the accompanying drawings illustrate some embodiments of the present disclosure, it should be understood that the present disclosure may be implemented in a plurality of forms, and should not be construed as being limited to the embodiments set forth herein; rather, these embodiments are provided for a more thorough and complete understanding of the present disclosure. It should be understood that the accompanying drawings and embodiments of the present disclosure are only for illustrative purposes, rather than for limiting the protection scope of the present disclosure.

It should be understood that a plurality of steps recited in the method embodiments of the present disclosure may be performed according to different sequences, and/or performed in parallel. In addition, the method embodiments may include additional steps and/or omit to perform the illustrated steps. The scope of the present disclosure is not limited in this respect.

As used herein, the term "including" and its variants are open-ended inclusion, that is, "including but not limited to". The term "based on" means "at least partially based on". The term "an embodiment" means "at least one embodiment"; the term "another embodiment" means "at least one additional embodiment"; and the term "some embodiments" means "at least some embodiments". The related definitions of other terms will be given in the following description.

It should be noted that the concepts such as "first" and "second" mentioned in the present disclosure are only used to distinguish different devices, modules or units, but not to limit the order or interdependence of functions performed by these devices, modules or units.

It should be noted that the modifications of "one" and "a plurality of" mentioned in the present disclosure are illustrative rather than restrictive, and those skilled in the art should understand that they should be understood as "one or more" unless contextually specified otherwise.

The names of messages or information exchanged between multiple devices in the embodiments of the present disclosure are only used for illustrative purposes, but not for limiting the scope of these messages or information.

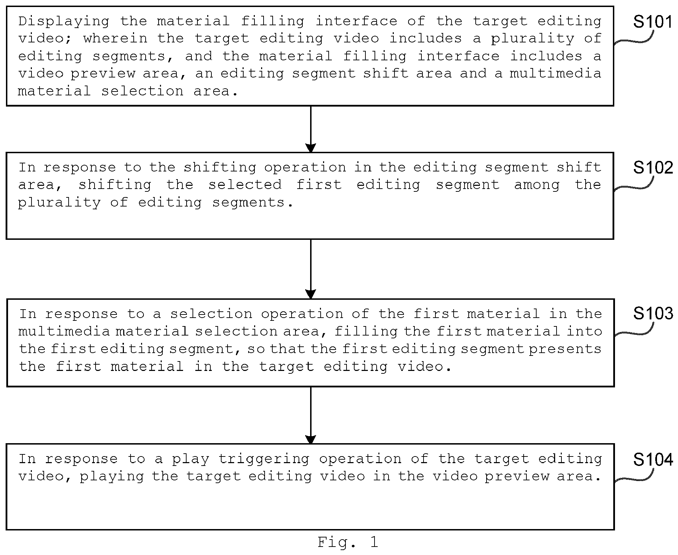

Fig. 1 is a schematic flowchart of a video editing method provided by an embodiment of the present disclosure. The method may be performed by a video editing apparatus, wherein the apparatus which may be realized by software and/or hardware, may be provided in an electronic device, for example, a mobile phone or a tablet computer. The video editing method provided by the embodiment of the present disclosure is adapted to the scenario of editing a video. As shown in Fig. 1, the video editing method provided by this embodiment may include:

S101, displaying the material filling interface of the target editing video; wherein the target editing video includes a plurality of editing segments, and the material filling interface includes a video preview area, an editing segment shift area and a multimedia material selection area.

Wherein, the target editing video may be the video that is being currently edited, which may be composed of a plurality of editing segments, and each editing segment may be filled with or without a material which may be a recommendation material and/or a material selected by the user. The recommendation material may be a material recommended to the user based on the preset recommendation rule and filled into corresponding editing segments, for example, a material recommended to the user based on an article selected by the user, a text input by the user, music selected by the user or a video template selected by the user, and the material may be an image material or a cinema image material and the like; in the following, description will be made with the example that the video is obtained by filling a material recommended based on an article selected by the user or a text input by the user, that is, with a scenario of creating a video from an image and a text as an example.

The video preview area may be an area for displaying and playing the target editing video for the user to preview the presentation effect of a plurality of filled materials in corresponding editing segments thereof.

The editing segment area may be an area for the user to select an editing segment in the target editing video, that is, the user may select an editing segment in the editing segment area to edit the editing segment. A plurality of editing segments in the target editing video may be displayed in the editing segment area. For example, each editing segment may be presented in the editing segment shift area in the form of an image, for example, an editing segment filled with a material in the target editing video may be presented in the editing segment shift area in the form of thumbnail of the material filled in the editing segment, and an editing segment not filled with a material in the target editing video may be presented in the form of placeholder image of the editing segment. A plurality of editing segments may be arranged in the editing segment area according to a temporal sequence thereof in the target editing video, for example, the plurality of editing segments may be arranged horizontally or vertically.

The multimedia material selection area may be configured to display materials to be selected by the user, and a plurality of materials to be selected by the user may be presented in the form of thumbnails in the multimedia material selection area. The materials may include, but is not limited to, the user's local material, for example, the user's local image material (for example, static image material and/or dynamic image material) and video material, as well as static image material and/or dynamic image material (for example, emoticons) in the material library. Here, the image material may be understood as a material of an image type, and the video material may be understood as a material of a video type.

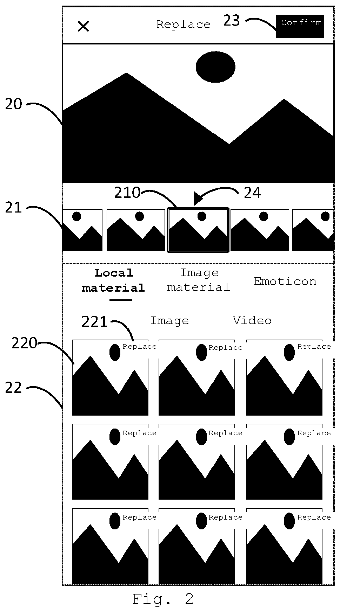

For example, the electronic device may display a material filling interface of a target editing video, and display a preview effect of an editing segment in the video in the video preview area 20 of the material filling interface (for example, displaying a screen of the first frame of the first editing segment in the video or the selected editing segment by default), display a plurality of editing segments in the video in the editing segment shift area 21 of the material filling interface, and display the material 220 that may be selected by the user in the multimedia material selection area 22 of the material filling interface, as shown in Fig. 2.

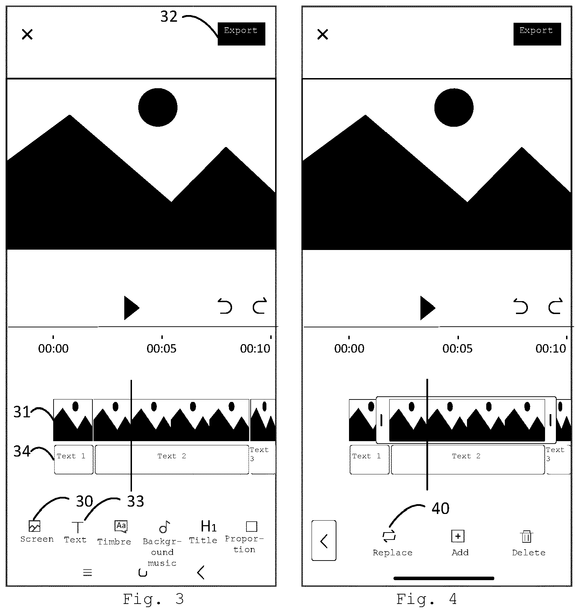

In one exemplary scenario, the electronic device may determine a recommendation material corresponding to each statement in the article or text according to the preset material recommendation rule based on the article selected by the user or the text input by the user, fill a plurality of editing segments in the video with the determined recommendation material, and display the video editing interface of the video (as shown in Fig. 3) after filling is completed, so that the user may edit the material, text, audio or background music in the video. When intended to fill an editing segment that is not filled with a recommendation material (for example, a proper material is not detected) in the video with a material or to fill a material filled in a editing segment that is filled with the material in the video, the user may trigger a replacement control, for example, triggering the screen control 30 displayed in the video editing interface or triggering the video track segment of an editing segment in the video track 31 of the video to instruct the electronic device to display a screen control list (as shown in Fig. 4), and further trigger the replacement control 40 in the control list. When it is detected that the user triggers the replacement control 40 in the screen control list, the electronic device may shift the current interface from the video editing interface to the material filling interface of the video, as shown in Fig. 2.

S102, in response to the shifting operation in the editing segment shift area, shifting the selected first editing segment among the plurality of editing segments.

Wherein, the first editing segment may be understood as a selected editing segment, that is, an editing segment in a selected state in the editing segment shift area. The shifting operation may be understood as an operation of shifting the selected editing segment, for example, an operation of clicking or dragging an editing segment in the editing segment shift area or a sliding operation acting in the editing segment shift area.

In this embodiment, the user may select and edit different editing segments in the editing segment shift area, for example, the user may shift an editing segment in the editing segment shift area from a selected state to an unselected state or from an unselected state to a selected state by clicking the editing segment; the user may shift an editing segment in the editing segment shift area from an unselected state to a selected state by moving the editing segment to a preset selection position, and shift an editing segment in a preset selection position from a selected state to an unselected state by moving the editing segment from the preset selection position, and so forth.

In one embodiment, an editing segment may be selected by moving it to a preset selection position. At this time, the first editing segment is an editing segment located at a preset selection position of the editing segment, and the step of shifting the selected first editing segment among the plurality of editing segments includes: controlling a plurality of editing segments in the editing segment shift area to move synchronously so as to shift the selected first editing segment.

Wherein, when an editing segment is a segment located at a preset selection position, the selection operation may be a sliding operation with a sliding direction that is the same as the arrangement direction of a plurality of editing segments in the editing segment shift area, for example, when a plurality of editing segments are horizontally arranged, the selection operation may be a horizontal sliding operation.

In this embodiment, a preset selection position for the user to select an editing segment may be set in the editing segment shift area. The preset selection position may be set as required; for example, when a plurality of editing segments are horizontally arranged in the editing segment shift area, the preset selection position may be located at a position, for example, on the left, on the left right or in the center of the editing segment shift area; when a plurality of editing segments are vertically arranged in the editing segment shift area, the preset selection position may be located at a position, for example, on the upper side, on the lower side or in the center of the editing segment shift area. In the following, description will be made with a plurality of editing segments horizontally arranged in the editing segment shift area and a preset selection position located in the center of the editing segment shift area as an example.

For example, the electronic device displays a material filling interface, and displays a plurality of editing segments of the target editing video in the editing segment shift area 21 of the material filling interface, as shown in Fig. 2. When intended to select an editing segment, the user may slide horizontally in the editing segment shift area 21. When it is detected that the user slides horizontally in the editing segment shift area 21, the electronic device may control a plurality of editing segments in the editing segment shift area 21 to move synchronously along a sliding direction of the horizontal sliding, and when the user' s sliding ends, an editing segment moved to a preset selection position 210 in the editing segment shift area 21 is taken as the first editing segment.

S103, in response to a selection operation of the first material in the multimedia material selection area, filling the first material into the first editing segment, so that the first editing segment presents the first material in the target editing video.

Wherein, the selection operation may be an operation of selecting a material in the material selection area, for example, an operation of triggering the material or triggering a replacement control corresponding to the material. The first material may be a material corresponding to the selection operation, for example, a material triggered by the selection operation or a material corresponding to the replacement control triggered by the selection operation. The first editing segment may be an editing segment in a selected state in the editing segment shift area, for example, an editing segment located at a preset selection position in the editing segment shift area.

For example, when intended to fill a material into the selected first editing segment, the user may perform a selection operation on the first material, for example, triggering the material or triggering a replacement control corresponding to the material. When it is detected that the user triggers a material or a replacement control corresponding to a material, the electronic device may determine that a selection operation on the first material is received, and the first material is filled into the first editing segment in a selected state in the editing segment shift area. For example, when the first editing segment has not been filled with any material, the first material may be directly filled into the first editing segment; when the first editing segment has been filled with a material, the first material may be used to replace the filled original material that has been filled in the first editing segment.

In this embodiment, the material filling interface may be provided to include a video preview area, an editing segment shift area and a multimedia material selection area; thus, by way of the material filling interface, it is possible to realize shift the editing segments rapidly and fill and preview the materials without selecting editing segments to be filled in the video editing interface, entering the material filling interface to select a material for filling, and returning to the video editing interface again to check a preview effect of the editing segments filled with the material after filling. The technical solution of this embodiment can simplify the operation required for material filling, improve the editing efficiency of the video and the quality of the created video, and meet the requirements of the user for creating a high-quality video rapidly. Moreover, the technical solution of this embodiment can support the user to replace the originally recommended image material in the video with a video material, which can make the created video more conform to the user's desire and improve the user's experience.

In this embodiment, the material selected by the user may be directly filled into the first editing segment; when the duration and/or size of the material selected by the user is inconsistent with that of the first editing segment, the material selected by the user may also be cropped, and the cropped material may be filled into the first editing segment, and this embodiment is not limited thereto.

In one embodiment, the electronic device may automatically crop the material selected by the user. In this case, the step of filling the first material into the first editing segment so that the first editing segment presents the first material in the target editing video includes: cropping the first material using the preset cropping rule to obtain a second material, and filling the second material into the first editing segment so that the first editing segment presents the second material in the target editing segment.

Wherein, the second material may be a material obtained by cropping the first material. The preset cropping rule may include preset cropping size and/or cropping position, which may be set by the user or the developer as desired.

For example, as shown in Fig. 2, the electronic device displays a plurality of materials 220 that may be selected by the user and a replacement control 221 corresponding to each material in the multimedia material selection area 22. When intended to replace the first editing segment in a selected state (for example, an editing segment at the preset selection position 210) in the editing segment shift area 21 with a material, the replacement control 221 corresponding to the material may be triggered. When it is detected that the user triggers the replacement control 221 corresponding to a material displayed in the multimedia material selection area 22, the electronic device may regard the material as the first material selected by the user, and crop the first material using the preset cropping rule. For example, when the first material is a video material, the size of each video frame in the video material and/or the duration of the video material is cropped to obtain a second material which is consistent with a preset size and/or presentation duration of the first editing segment; when the first material is an image material, the size of the image material is cropped to obtain a second material which is consistent with a preset size of the first editing segment; and the obtained second material is further filled into the first editing segment to present the second material in the first editing segment.

In another embodiment, the electronic device may crop the material selected by the user based on the user's cropping operation. In this case, before the first material is filled into the first editing segment, there further includes: displaying a cropping interface of the first material; cropping the first material to obtain a second material in response to a cropping operation in the cropping interface; wherein the step of filling the first material into the first editing segment so that the first editing segment presents the first material in the target editing video includes: filling the second material into the first editing segment in response to a filling operation in the cropping interface so that the first editing segment presents the second material in the target editing segment.

Wherein, the filling operation may be a triggering operation to fill the second material obtained by cropping into the first editing segment, for example, an operation to trigger a replacement control in the cropping page of the first material.

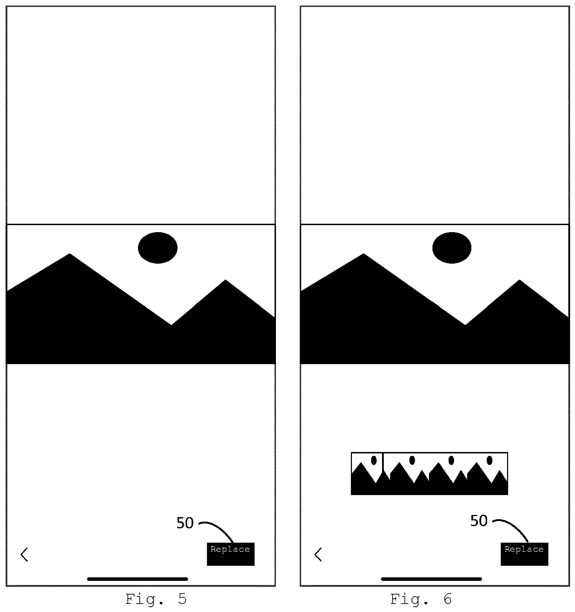

For example, as shown in Fig. 2, the electronic device displays a plurality of materials 220 that may be selected by the user and a replacement control 221 corresponding to each material in the multimedia material selection area 22. When intended to crop a material, the user may trigger the material 220 displayed in the multimedia material selection area 22. When it is detected that the user triggers a material 220 displayed in the multimedia material selection area 22, the electronic device may regard the material as the first material selected by the user and shift the current interface from the material filling interface to the cropping interface, as shown in Figs. 5 and 6. When the first material is an image material, the user may crop the first material into a desirable size in the cropping interface (as shown in Fig. 5) to obtain the second material; when the first material is a video material, the user may cut the segment intended to be presented in the first editing segment from the first material as the second material. When cropping of the first material is completed, the user may further trigger the replacement control 50 in the cropping interface. When it is detected that the user triggers the replacement control 50 in the cropping interface, the electronic device may shift the current interface from the cropping interface to the material filling interface, and fill the second material obtained by cropping into the first editing segment.

For example, the first material includes a video material, and after filling the second material into the first editing segment, there further includes: extending the second material into a third material based on the first material in response to the extending operation of the first editing segment, and filling the third material into the first editing segment to extend the first editing segment; and shorten an editing segment adjacent to the first editing segment in the target editing video.

Wherein, the extension operation may be an operation of extending the first editing segment, that is, an operation of extending the duration of the first editing segment; the operation may be an operation of dragging the video track segment corresponding to the first editing segment, for example, the operation may be an operation of dragging the left boundary of the video track segment to the left and/or an operation of dragging the right boundary of the video track segment to the right when the video track segment is a horizontal track segment.

With the video track of the target editing video located in the video editing interface of the target editing video as an example, after the user fills the material, for example, after filling the second material into the first editing segment, the user may trigger the confirmation control 23 in the material filling interface; when it is detected that the user triggers the confirmation control 23 in the material filling interface, the electronic device may shift the current interface to the material editing interface, as shown in Fig. 4 (with the video track segment of the first editing segment as the second video track segment in the video track as an example in the drawing) . When intended to extend the first editing segment, the user may drag the left boundary of the video track segment of the first editing segment to the left or drag the right boundary of the video track of the first editing segment to the right. When the user's dragging operation is detected, the electronic device may determine that the extension operation on the first editing segment is received, control the boundary of the video track segment of the first editing segment to move along with the user' s dragging operation, and when the user's dragging ends, extend the second material to a duration corresponding to the dragged video track segment based on the user's dragging direction and the first material so as to obtain a third material, and fill the third material into the first editing segment to extend the first editing segment to a duration corresponding to the dragged video track segment, and correspondingly shorten the duration of an editing segment adjacent to the first editing segment in the target editing segment video. For example, when the user drags the video track segment of the first editing segment to the left, the video frame before the second material in the first material is used to extend the second material forward; when the user drags the video track segment of the first editing segment to the right, the video frame after the second material in the first material is used to extend the second material backward, and the third material obtained by extension is used to replace the second material in the first editing segment, and other materials filled in the overlapping part of the editing segment corresponding to the video track segment of the overlapping part are deleted.

In the above-described embodiments, the first editing segment may be extended when there is an overlapping part between the video track segment of the extended first editing segment and the video track segment of another editing segment. It is also possible to extend the first editing segment and delete another editing segment only when the video track segment of said another editing segment completely overlaps with the video track segment of the extended first editing segment, that is, only when the video track segment of the another editing segment is completely covered by the video track segment of the extended first editing segment. However, when the video track segment of the extended first editing segment only overlaps with part of the video track segment corresponding to another editing segment, the first editing segment is not extended to a time node corresponding to the editing segment in the video, and the video track segment of the first editing segment may be further adjusted not to overlap with the video track segment of the another material, and this embodiment is not limited thereto.

In addition, the duration of the first material may be further considered when the boundary of the video track segment of the first editing segment is controlled to move along with the user's dragging operation. For example, the boundary of the video track segment of the first editing segment may be controlled to move along with the user's dragging operation only when the duration corresponding to the video track segment of the first editing segment does not exceed the duration of the first material. When the duration corresponding to the video track segment of the first editing segment reaches or exceeds the duration of the first material, the boundary of the video track segment of the first editing segment is no longer controlled to move along with the user's dragging operation.

S104, in response to a play triggering operation of the target editing video, playing the target editing video in the video preview area.

Wherein, the play triggering operation may be a triggering operation of playing the target editing video, that is, a triggering operation of instructing the electronic device to play a plurality of editing segments in the target editing video sequentially, for example, an operation of triggering the play control in the material filling interface.

For example, with a plurality of editing segments in the editing segment selection area 21 horizontally arranged as an example, the electronic device displays the material filling interface, as shown in Fig. 2. When intended to preview a plurality of materials filled in the target editing video, the user may trigger the play control 24 in the material filling interface. When it is detected that the user triggers the play control 24, the electronic device may play the target editing video from the beginning of the first editing segment or the beginning of the currently selected editing segment, so that the user may check the presentation effect of the material filled in each editing segment.

In this embodiment, when an editing segment is played in the video preview area, the editing segment displayed in the target editing segment shift area may be shifted to a selected state. For example, during the process of playing a video, a plurality of editing segments in the editing segment shift area are controlled to move synchronously (for example, moving synchronously to the left), so as to move an editing segment that is being played in the video preview area to a preset selection position of the editing segment shift area, so as to facilitate the user to determine the currently played editing segment in the video preview area. At this time, after the target editing video is displayed for play in the video preview area, there further includes: shifting the current editing segment displayed for play in the video preview area to a selected state.

In this embodiment, after completing editing the target editing video, the user may trigger the export control 32 in the video editing interface (as shown in Fig. 3) to instruct the electronic device to synthesize a plurality of editing segments in the target editing video, and may save or post the synthesized video.

The video editing method provided by this embodiment comprises: displaying a material filling interface of a target editing video, wherein the target editing video includes a plurality of editing segments, and the material filling interface includes a video preview area, an editing segment shift area and a multimedia material selection area; shifting a selected first editing segment among a plurality of editing segments of the target editing video in response to the shifting operation in the editing segment shift area; filling the first material into the first editing segment in response to a selection operation of the first material in the multimedia material selection area, so that the first editing segment presents the first material in the target editing video; and playing the target editing video in the video preview area in response to a play triggering operation of the target editing video. By way of the above-described technical solution, this embodiment implements shifting the editing segments rapidly and filling and previewing materials in the editing segments in the same interface, which may simplify the operation required for material filling, improve the editing efficiency of the video and the quality of the created video, and meet the requirements of the user for creating a high-quality video rapidly.

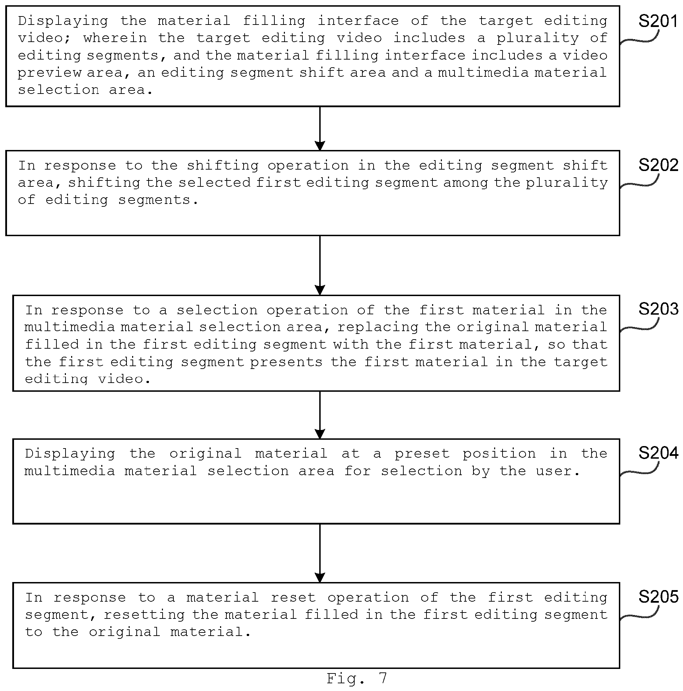

Fig. 7 is a schematic flowchart of another video editing method provided by an embodiment of the present disclosure. The solution in this embodiment may be combined with one or more exemplary solutions in the above-described embodiments. For example, the step of filling the first material into the first editing segment includes: replacing the original material filled in the first editing segment with the first material.

For example, after replacing the original material filled in the first editing segment with the first material, there further includes: resetting the material filled in the first editing segment to the original material in response to a material reset operation on the first editing segment.

For example, after replacing the original material filled in the first editing segment with the first material, there further includes: displaying the original material at a preset position in the multimedia material selection area for selection by the user.

As shown in Fig. 7, the video editing method provided by this embodiment may include:
S201, displaying the material filling interface of the target editing video; wherein the target editing video includes a plurality of editing segments, and the material filling interface includes a video preview area, an editing segment shift area and a multimedia material selection area.
S202, in response to the shifting operation in the editing segment shift area, shifting the selected first editing segment among the plurality of editing segments.
S203, in response to a selection operation of the first material in the multimedia material selection area, replacing the original material filled in the first editing segment with the first material, so that the first editing segment presents the first material in the target editing video.

Wherein, the original material may be a material filled in the first editing segment before the selection operation is received.

For example, when intended to replace the original material filled in an editing segment with the first material in the multimedia material selection area, the user may select the editing segment and perform a selection operation on the first material. When it is detected that the user selects a material, the electronic device may delete the original material filled in the editing segment selected by the user and fill the first material selected by the user into the editing segment.

S204, displaying the original material at a preset position in the multimedia material selection area for selection by the user.

In this embodiment, when the user is not content with the original material filled in the target editing video, the original material may be replaced. When the user replaces the original material in the video with another material (for example, the first material), the electronic device may display the replaced original material in the multimedia material selection interface, so that the user may resume the original material when the user is still not content with the replaced material.

As an example, the electronic device displays the original material filled in the first editing segment in the multimedia material selection area. For example, the original material filled in the first editing segment is displayed at a display position of the first material in the image material panel (that is, the panel displayed in the multimedia material selection area after triggering the image material control) in the multimedia material selection area. When intended to replace the material filled in the first editing segment again with the original material, the user may perform a selection operation on the original material, for example, triggering a replacement control corresponding to the original material. When the user's selection operation is detected, the electronic device may replace the material filled in the first editing segment with the original material, and may further cease displaying the original material at a display position of the first material in the image material panel in the multimedia material selection area.

S205, in response to a material reset operation of the first editing segment, resetting the material filled in the first editing segment to the original material.

Wherein, the reset operation may be understood as an operation of resetting the material filled in the first editing segment to the original material, for example, an operation of triggering the reset control in the material filling interface.

For example, when the material filled in the currently selected first editing segment is not its original material, the electronic device may display the reset control in the material filling interface. When intended to reset the material filled in the first editing segment, the user may trigger the reset control. When it is detected that the user triggers the reset control in the material filling interface, the electronic device may reset the material filled in the first editing segment to its original material.

In one embodiment, the user may adjust the caption content in each editing segment of the target editing video. At this time, the video editing method provided by this embodiment may further include: modifying the caption content of the second editing segment in response to a caption modification operation of the second editing segment in the target editing video; updating the audio data of the second editing segment based on the modified caption content, and adjusting the duration of the second editing segment according to the updated audio data.

Wherein, the caption modification operation may be an operation of modifying the caption content of an editing segment, for example, an operation of editing the caption content corresponding to an editing segment. The second editing segment may be an editing segment corresponding to the caption modification operation.

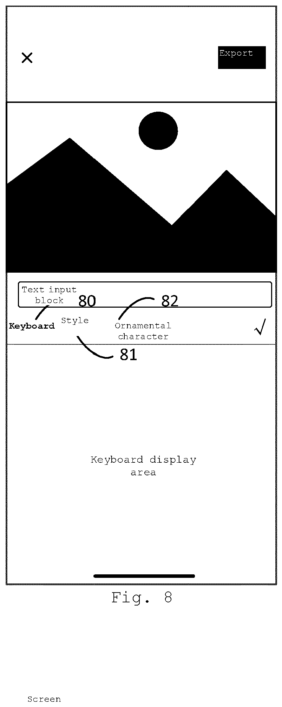

As an example, as shown in Fig. 3, the electronic device displays a video editing interface. When intended to change the caption content of an editing segment in the target editing video, the user may trigger a text control 33 in the video editing interface or trigger a caption track segment corresponding to the editing segment in a caption track 34 of the target editing video when the editing segment is displayed in the video editing interface, so as to instruct the electronic device to display a text editing interface, as shown in Fig. 8. The keyboard control 80 in the text editing interface is further triggered to instruct the electronic device to display a keyboard for the user to edit the caption content of the editing segment. The electronic device may determine the caption content of the editing segment based on the user' s editing operation, generate new audio data according to the modified caption content, replace the original audio data of the editing segment with the new audio data, and adjust the duration of the editing segment according to the duration of the new audio data.

In this embodiment, the duration of a corresponding editing segment may be adjusted according to the generated audio data using an adjustment method corresponding to a type of the material filled in the editing segment. For example, when the material filled in the editing segment is an image material, the time length of the material displayed in the editing segment may be shortened or extended directly according to the duration of the generated audio data. When the material filled in the editing segment is a video material, if the duration of the generated audio data is longer than that of the original audio data, the material may be extended by adding video frames or scenery shots before/after the material that are located before/after the material in the uncropped material, and the extended material may be filled in the editing segment; and if the duration of the generated audio data is shorter than that of the original audio data, the material may be shortened by deleting some video frames at one or both ends of the material, and the shortened material may be filled into the editing segment.

In one embodiment, the user may adjust a caption style of each material in the video; at this time, the video editing method provided by this embodiment further includes adjusting a caption style of the third editing segment in response to a caption style adjustment operation on the third editing segment in the target editing video.

Wherein, the caption style adjustment operation may be an operation of adjusting a caption style of a caption in an editing segment in the target editing video. The third editing segment may be an editing segment corresponding to the caption style adjustment operation.

As an example, as shown in Fig. 3, the electronic device displays a video editing interface. When intended to change a caption style of a caption in an editing segment in the target editing video, the user may trigger a text control 33 in the video segment interface or a caption track segment corresponding to the editing segment in a caption track 34 of the target editing video when the editing segment is displayed in the video editing interface, so as to instruct the electronic device to display a text editing interface, as shown in Fig. 8. The style control 81 or the ornamental character control 82 in the text editing interface is triggered in one step so as to instruct the electronic device to display a list of styles or a list of ornamental characters that may be selected by the user, and select a style template or an ornamental character intended to be selected by the user. When it is detected that the user triggers a style template in a list of styles or triggers an ornamental character in a list of ornamental characters, the electronic device may determine that the caption adjustment operation on the editing segment is received, and the caption of the editing segment is presented using a style template or an ornamental character selected by the user in response to the caption adjustment operation.

The video editing method provided by this embodiment can implement replacing the material filled in the video and resetting the original material filled in the video, so that the user can replace or reset the material filled in the video rapidly, and further improve the editing efficiency of the video.

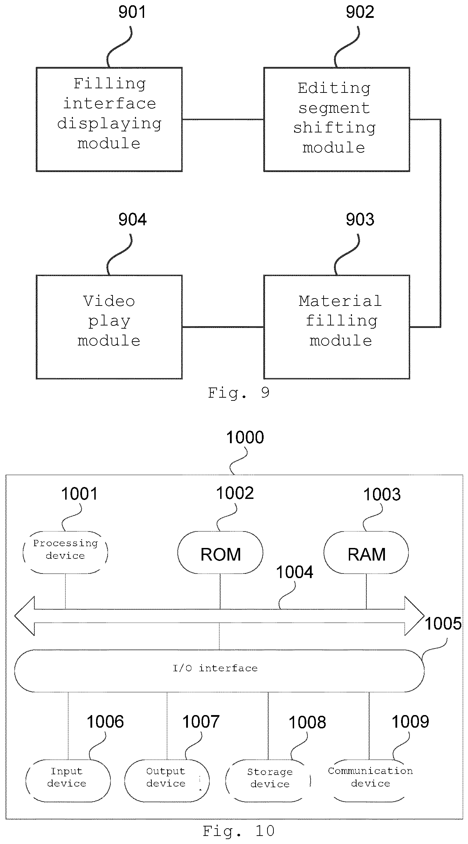

Fig. 9 is a structural block view of a video editing apparatus provided by an embodiment of the present disclosure. The apparatus may be realized by software and/or hardware, and may be provided in an electronic device, for example, a mobile phone or a tablet computer, and the video may be edited by performing a video editing method. As shown in Fig. 9, the video editing apparatus provided by this embodiment may include: a filling interface displaying module 901, an editing segment shifting module 902, a material filling module 903 and a video play module 904, wherein,
The filling interface displaying module 901 is configured to display a material filling interface of a target editing video; wherein the target editing video includes a plurality of editing segments, and the material filling interface includes a video preview area, an editing segment shift area and a multimedia material selection area;
The editing segment shifting module 902 is configured to shift the selected first editing segment among the plurality of editing segments in response to a shifting operation in the editing segment shift area;
The material filling module 903 is configured to fill the first material into the first editing segment in response to a selection operation of the first material in the multimedia material selection area, so that the first editing segment presents the first material in the target editing video;
The video play module 904 is configured to display the target editing video for play in the video preview area in response to a play triggering operation of the target editing video.

The video editing apparatus provided by this embodiment displays the material filling interface of the target editing video through a filling interface displaying module, wherein the target editing video includes a plurality of editing segments, and the material filling interface includes a video preview area, an editing segment shift area and a multimedia material selection area; the editing segment shifting module shifts the selected first editing segment among a plurality of editing segments of the target editing video in response to the shifting operation in the editing segment shift area; the material filling module fills the first material into the first editing segment in response to a selection operation of the first material in the multimedia material selection area, so that the first editing segment presents the first material in the target editing video; the video play module displays the target editing video for play in the video preview area in response to a play triggering operation of the target editing video. By way of the above-described technical solution, this embodiment implements shifting the editing segments rapidly and filling and previewing materials in the editing segments in the same interface, which may simplify the operation required for material filling, improve the editing efficiency of the video and the quality of the created video, and meet the requirements of the user for creating a high-quality video rapidly.

In the above-described solution, the first editing segment may be an editing segment located at a preset selection position of the editing segment, and the editing segment shifting module 902 may be configured to: control a plurality of editing segments in the editing segment shift area to move synchronously so as to shift the selected first editing segment.

In the above-described solution, the material filling module 903 may be configured to: crop the first material using the preset cropping rule to obtain a second material, and fill the second material into the first editing segment, so that the first editing segment presents the second material in the target editing segment.

In the above-described solution, the material filling module 903 may include: a cropping interface display unit configured to display a cropping interface of the first material; a material cropping unit configured to crop the first material in response to a cropping operation in the cropping interface to obtain a second material; a material filling unit configured to fill the second material into the first editing segment in response to a filling operation in the cropping interface, so that the first editing segment presents the second material in the target editing segment.

In the above-described solution, the first material may include a video material, and the video editing apparatus provided by this embodiment may further include: a video editing segment extension module configured to extend the second material into a third material based on the first material in response to an extension operation of the first editing segment, and fill the third material into the first editing segment to extend the first editing segment; and shorten an editing segment adjacent to the first editing segment in the target editing video.

In the above-described solution, the video play module 904 may also be configured to: shift the current editing segment displayed for play in the video preview area to the selected state after the target editing video is displayed for play in the video preview area.

In the above-described solution, the material filling module 903 may be configured to: replace the original material filled in the first editing segment with the first material.

For example, the video editing apparatus provided by this embodiment may further include: a material resetting module configured to reset the material filled in the first editing segment to the original material in response to a material reset operation on the first editing segment after the original material filled in the first editing segment is replaced with the first material.

In the above-described solution, the material filling module 903 may also be configured to: display the original material at a preset position in the multimedia material selection area for selection by the user after the original material filled in the first editing segment is replaced with the first material.

For example, the video editing apparatus provided by this embodiment may further include: a caption content modifying module configured to modify the caption content of the second editing segment in response to a caption modification operation of a second editing segment in the target editing video; and updating the audio data of the second editing segment based on the modified caption content, and adjusting the duration of the second editing segment according to the updated audio data.

For example, the video editing apparatus provided by this embodiment may further include: a caption style adjusting module configured to adjust a caption style of the third editing segment in response to a caption style adjustment operation of the third editing segment in the target editing video.

The video editing apparatus provided by the embodiment of the present disclosure may perform the video editing method provided by any embodiment of the present disclosure, and has corresponding functional modules and beneficial effects for performing the video editing method. For technical details not described in detail in this embodiment, reference may be made to the video editing method provided by any embodiment of this disclosure.

Next, referring to Fig. 10, it shows a structural schematic view of an electronic device 1000 (for example, a terminal device) suitable for implementing the embodiment of the present disclosure. The terminal device in an embodiment of the present disclosure may include, but is not limited to, mobile terminals such as mobile phones, notebook computers, digital broadcast receivers, PDAs (personal digital assistants), PADs (pad computers), PMP (Portable Multimedia Player) and in-vehicle terminals (for example, in-vehicle navigation terminals) ; and fixed terminals such as digital TVs, desktop computers and the like. The electronic device shown in Fig. 10 is only an example, and shall not limit the function and operation scope of the embodiments of the present disclosure.

As shown in Fig. 10, the electronic device 1000 may include a processing device (for example, a central processing unit, a graphic processor, and the like) 1001, which may perform a plurality of suitable actions and processing according to a program stored in a Read-only Memory (ROM) 1002 or a program loaded from a storage device 1006 into a Random Access Memory (RAM) 1003. In the RAM 1003, a plurality of programs and data required for the operation of the electronic device 1000 are also stored. The processing device 1001, the ROM 1002 and the RAM 1003 are connected to each other through a bus 1004. The input/output (I/O) interface 1005 is also connected to the bus 1004.

Generally, the following devices may be connected to the I/O interface 1005: an input device 1006 including, for example, a touch screen, a touch pad, a keyboard, a mouse, a camera, a microphone, an accelerometer, a gyroscope, and the like; an output device 1007 including, for example, a Liquid Crystal Display (LCD), a speaker, a vibrator, and the like; a storage device 1006 including, for example, a magnetic tape, a hard disk, and the like; and a communication device 1009. The communication device 1009 may allow the electronic device 1000 to be in wireless or wired communication with other devices to exchange data. Although Fig. 10 shows the electronic device 1000 with a plurality of devices, it should be understood that there is no requirement to implement or have all the devices shown. It is possible to alternatively implement or have more or less devices.

According to an embodiment of the present disclosure, the process described above with reference to the flowchart may be implemented as a computer software program. For example, in an embodiment of the present disclosure, there includes a computer program product, which includes a computer program carried on a non-transient computer-readable medium, wherein the computer program contains program codes configured to perform the method shown in the flowchart. In such embodiment, the computer program may be downloaded and installed from the network through the communication device 1009, installed from the storage device 1006, or installed from the ROM 1002. When the computer program is executed by the processing device 1001, the above-described functions defined in the method of the embodiment of the present disclosure are executed.

It is to be noted that, the above-described computer-readable medium of the present disclosure may be a computer-readable signal medium, a computer-readable storage medium or any combination thereof. The computer-readable storage medium may be, for example, but is not limited to: an electrical, magnetic, optical, electromagnetic, infrared, or semiconductor system, apparatus, or device, or a combination thereof. More specific examples of the computer-readable storage medium may include, but is not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by an instruction execution system, apparatus, or device or used in combination therewith. In the present disclosure, the computer-readable signal medium may include a data signal propagated in a baseband or as part of a carrier wave, wherein a computer-readable program code is carried. Such propagated data signal may take many forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit a program for use by an instruction execution system, apparatus, or device or in combination with therewith. The program code contained on the computer-readable medium may be transmitted by any suitable medium, including but not limited to: a wire, an optical cable, radio frequency (RF), and the like, or any suitable combination thereof.

In some embodiments, the client and the server may communicate using any currently known or future developed network protocol such as HTTP (Hyper Text Transfer Protocol), and may be interconnected with digital data communication in any form or medium (for example, communication network) . Examples of communication networks include a Local Area Network ("LAN"), a Wide Area Network ("WAN"), an extranet (for example, Internet) and an end-to-end network (for example, an ad hoc end-to-end network), as well as any currently known or future developed network.

The above-described computer-readable medium may be included in the above-described electronic device; or may also exist alone without being assembled into the electronic device.

The computer-readable medium described above carries one or more programs that, when executed by the electronic device, cause the electronic device to: display a material filling interface of a target editing video, wherein the target editing video includes a plurality of editing segments, and the material filling interface includes a video preview area, an editing segment shift area and a multimedia material selection area; shift the selected first editing segment among the plurality of editing segments in response to a shifting operation in the editing segment shifting area; fill the first material into the first editing segment in response to a selection operation of the first material in the multimedia material selection area, so that the first editing segment presents the first material in the target editing video; and display the target editing video for play in the video preview area in response to a play triggering operation of the target editing video.

The computer program code for performing the operations of the present disclosure may be written in one or more programming languages or a combination thereof, the above-described programming languages including but are not limited to object-oriented programming languages, such as Java, Smalltalk, and C++, and also include conventional procedural programming languages, such as "C" language or similar programming languages. The program code may be executed entirely on the user's computer, partly on the user's computer, executed as an independent software package, partly on the user' s computer and partly executed on a remote computer, or entirely executed on the remote computer or server. In the case of a remote computer, the remote computer may be connected to the user's computer through any kind of network (including a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to a plurality of embodiments of the present disclosure. In this regard, each block in the flowchart or block view may represent a module, a program segment, or part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It should also be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The units involved in the described embodiments of the present disclosure may be implemented in software or hardware. Wherein, the names of the modules do not constitute a limitation on the units themselves under a circumstance.

The functions described hereinabove may be performed at least in part by one or more hardware logic components. For example, without limitation, the hardware logic components of a demonstrative type that may be used include: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

The context of the present disclosure, a machine-readable medium may be a tangible medium, which may contain or store a program for use by the instruction execution system, apparatus, or device or use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, Example 1 provides a video editing method, comprising:
displaying a material filling interface of a target editing video; wherein the target editing video includes a plurality of editing segments, and the material filling interface includes a video preview area, an editing segment shift area and a multimedia material selection area;
shifting a selected first editing segment among the plurality of editing segments in response to a shifting operation in the editing segment shifting area;
filling the first material into the first editing segment in response to a selection operation of the first material in the multimedia material selection area, so that the first editing segment presents the first material in the target editing video; and
playing the target editing video in the video preview area in response to a play triggering operation of the target editing video.

According to one or more embodiments of the present disclosure, Example 2 provides the method according to Example 1, wherein the first editing segment is an editing segment located at a preset selection position of the editing segment, and the step of shifting the selected first editing segment among the plurality of editing segments includes:
controlling a plurality of editing segments in the editing segment shift area to move synchronously so as to shift the selected first editing segment.

According to one or more embodiments of the present disclosure, Example 3 provides the method according to Example 1, wherein the step of filling the first material into the first editing segment so that the first editing segment presents the first material in the target editing video includes:
cropping the first material using the preset cropping rule to obtain a second material, and filling the second material into the first editing segment, so that the first editing segment presents the second material in the target editing segment.

According to one or more embodiments of the present disclosure, Example 4 provides the method according to Example 1, which further comprises, before the step of filling the first material into the first editing segment:
displaying a cropping interface of the first material;
cropping the first material to obtain a second material in response to a cropping operation in the cropping interface;
wherein the step of filling the first material into the first editing segment so that the first editing segment presents the first material in the target editing video includes:
   filling the second material into the first editing segment in response to a filling operation in the cropping interface, so that the first editing segment presents the second material in the target editing segment.

According to one or more embodiments of the present disclosure, Example 5 provides the method according to Example 3 or 4, wherein the first material includes a video material, which further comprises, after filling the second material into the first editing segment:
extending the second material into a third material based on the first material in response to an extension operation on the first editing segment, and filling the third material into the first editing segment to extend the first editing segment; and
shortening an editing segment adjacent to the first editing segment in the target editing video.

According to one or more embodiments of the present disclosure, Example 6 provides the method according to Example 1, which further comprises, after playing the target editing video in the video preview area:
shifting the current editing segment displayed for play in the video preview area to a selected state.

According to one or more embodiments of the present disclosure, Example 7 provides the method according to Example 1, wherein the step of filling the first material into the first editing segment includes:
replacing the original material filled in the first editing segment with the first material.

According to one or more embodiments of the present disclosure, Example 8 provides the method according to Example 7, which further comprises, after replacing the original material filled in the first editing segment with the first material:
resetting the material filled in the first editing segment to the original material in response to a material reset operation on the first editing segment.

According to one or more embodiments of the present disclosure, Example 9 provides the method according to Example 7, which further comprises, after replacing the original material filled in the first editing segment with the first material:
displaying the original material at a preset position in the multimedia material selection area for selection by the user.

According to one or more embodiments of the present disclosure, Example 10 provides the method according to any of Examples 1 to 4 and 6 to 9, which further comprises:
modifying the caption content of the second editing segment in response to a caption modification operation of the second editing segment in the target editing video; and
updating the audio data of the second editing segment based on the modified caption content, and adjusting the duration of the second editing segment according to the updated audio data.

According to one or more embodiments of the present disclosure, Example 11 provides the method according to any of Examples 1 to 4 and 6 to 9, which further comprises:
adjusting a caption style of the third editing segment in response to a caption style adjustment operation on the third editing segment in the target editing video.

According to one or more embodiments of the present disclosure, Example 12 provides a video editing apparatus, comprising:
a filling interface displaying module configured to display a material filling interface of a target editing video; wherein the target editing video includes a plurality of editing segments, and the material filling interface includes a video preview area, an editing segment shift area and a multimedia material selection area;
an editing segment shifting module configured to shift the selected first editing segment among the plurality of editing segments in response to a shifting operation in the editing segment shift area;
a material filling module configured to fill the first material into the first editing segment in response to a selection operation of the first material in the multimedia material selection area, so that the first editing segment presents the first material in the target editing video; and
a video play module configured to display the target editing video for play in the video preview area in response to a play triggering operation of the target editing video.

According to one or more embodiments of the present disclosure, Example 13 provides an electronic device comprising:
one or more processors; and
a memory configured to store one or more programs,
wherein the one or more programs, when executed by the one or more processors, causes the one or more processors to perform the video editing method according to any of Examples 1 to 11.

According to one or more embodiments of the present disclosure, Example 14 provides a computer-readable storage medium on which a computer program is stored, which, when executed by a processor, realizes the video editing method as described in any of Examples 1-11.

In addition, although a plurality of operations is depicted in a specific order, this should not be understood as requiring these operations to be performed in the specific order shown or performed in a sequential order. Under certain circumstances, multitasking and parallel processing might be advantageous. Likewise, although several specific implementation details are contained in the above discussion, these should not be construed as limiting the scope of the present disclosure. Certain features that are described in the context of individual embodiments may also be implemented in combination in a single embodiment. On the contrary, a plurality of features described in the context of a single embodiment may also be implemented in multiple embodiments individually or in any suitable sub-combination.

## Claims

1. A video editing method, comprising:
displaying a material filling interface of a target editing video; wherein the target editing video includes a plurality of editing segments, and the material filling interface includes a video preview area, an editing segment shift area and a multimedia material selection area;
shifting a selected first editing segment among the plurality of editing segments in response to a shifting operation in the editing segment shifting area;
filling a first material into the first editing segment in response to a selection operation of the first material in the multimedia material selection area, so that the first editing segment in the target editing video presents the first material; and
playing the target editing video in the video preview area in response to a play triggering operation of the target editing video.

2. The method according to claim 1, wherein the first editing segment is an editing segment located at a preset selection position of the editing segment, and the step of shifting a selected first editing segment among the plurality of editing segments includes:
controlling a plurality of editing segments in the editing segment shift area to move synchronously so as to shift the selected first editing segment.

3. The method according to claim 1, wherein the step of filling the first material into the first editing segment so that the first editing segment in the target editing video presents the first material includes:
cropping the first material using a preset cropping rule to obtain a second material, and filling the second material into the first editing segment, so that the first editing segment in the target editing segment presents the second material.

4. The method according to claim 1, further comprising, before the step of filling the first material into the first editing segment:
displaying a cropping interface of the first material;
cropping the first material to obtain a second material in response to a cropping operation in the cropping interface;
wherein the step of filling the first material into the first editing segment so that the first editing segment in the target editing video presents the first material includes:
filling the second material into the first editing segment in response to a filling operation in the cropping interface, so that the first editing segment in the target editing segment presents the second material.

5. The method according to claim 3 or 4, wherein the first material includes a video material, and the method further comprises, after filling the second material into the first editing segment:
extending the second material into a third material based on the first material in response to an extension operation on the first editing segment, and filling the third material into the first editing segment to extend the first editing segment; and
shortening an editing segment adjacent to the first editing segment in the target editing video.

6. The method according to claim 1, further comprising, after playing the target editing video in the video preview area:
shifting a current editing segment displayed for play in the video preview area to a selected state.

7. The method according to claim 1, wherein the step of filling the first material into the first editing segment includes:
replacing an original material filled in the first editing segment with the first material.

8. The method according to claim 7, further comprising, after the step of replacing the original material filled in the first editing segment with the first material:
resetting a material filled in the first editing segment to the original material in response to a material reset operation on the first editing segment.

9. The method according to claim 7, further comprising, after the step of replacing the original material filled in the first editing segment with the first material:
displaying the original material at a preset position in the multimedia material selection area for selection by a user.

10. The method according to any of claims 1 to 4 and 6 to 9, further comprising:
modifying a caption content of a second editing segment in response to a caption modification operation of the second editing segment in the target editing video; and
updating an audio data of the second editing segment based on a modified caption content, and adjusting a duration of the second editing segment according to an updated audio data.

11. The method according to any of claims 1 to 4 and 6 to 9, further comprising:
adjusting a caption style of a third editing segment in response to a caption style adjustment operation on the third editing segment in the target editing video.

12. A video editing apparatus, comprising:
a filling interface displaying module configured to display a material filling interface of a target editing video; wherein the target editing video includes a plurality of editing segments, and the material filling interface includes a video preview area, an editing segment shift area and a multimedia material selection area;
an editing segment shifting module configured to shift a selected first editing segment among the plurality of editing segments in response to a shifting operation in the editing segment shift area;
a material filling module configured to fill a first material into the first editing segment in response to a selection operation of the first material in the multimedia material selection area, so that the first editing segment in the target editing video presents the first material; and
a video play module configured to display the target editing video for play in the video preview area in response to a play triggering operation of the target editing video.

13. An electronic device comprising:
at least one processor;
a memory configured to store one or more programs,
wherein the one or more programs, when executed by the at least one processor, causes the at least one processor to perform the video editing method according to any of claims 1 to 11.

14. A computer-readable storage medium having a computer program stored thereon that, when executed by a processor, performs the video editing method according to any of claims 1 to 11.
